# EUROPÄISCHE PATENTSCHRIFT

(11) **EP 3 771 051 B1**
(45) Veröffentlichungstag und Bekanntmachung des Hinweises auf die Patenterteilung: **07.09.2022**
(21) Anmeldenummer: 20184637.5
(22) Anmeldetag: 08.07.2020
(51) Int. Cl.: H02G 3/06, H02G 3/38, H02G 3/00, H02G 3/04, H01R 9/26

(54) **MODULARER KABELKANAL**
MODULAR CABLE DUCT
CANAL DE CÂBLE MODULAIRE

(30) Priorität: 25.07.2019 DE 102019120079
(43) Veröffentlichungstag der Anmeldung: 27.01.2021
(73) Patentinhaber: Tubbesing, Roland, 81739 München (DE)
(72) Erfinder: Tubbesing, Roland, 81739 München (DE)
(74) Vertreter: Reinhardt, Markus

(56) Entgegenhaltungen:
- US-A- 4 688 869
- US-A1- 2008 302 566
- US-A1- 2010 038 129

## Beschreibung

Die vorliegende Erfindung betrifft ganz allgemein einen Kabelkanal, und betrifft insbesondere einen modularen Kabelkanal gemäß Patentanspruch 1, der in Self-Storage-Anlagen eingesetzt wird, um in den Bereichen Sicherheit, Komfort und Facility-Management Vorteile für den Betreiber der Anlage und die Nutzer, d.h. die Kunden und Mieter der Self-Storage-Abteile zu ermöglichen.

Bekannte Self-Storage-Anlagen sind normalerweise in größeren Gebäuden untergebracht und umfassen eine große Anzahl von abgeschlossenen und sichtgeschützten Abteilen, die in der Regel unterschiedliche Größen (qm Grundfläche und cbm Rauminhalt) aufweisen.

Jedes Self-Storage-Abteil weist eine individuelle Zugangstüre auf, die individuell mit einem Schloss und Schlüssel absperrbar ist. Mehrere Self-Storage-Abteile können in einem Abschnitt des Gebäudes hinter absperrbaren Zugangstüren angeordnet sein oder können in unterschiedlichen Geschossen des Gebäudes hinter absperrbaren Zugangstüren angeordnet sein, um so bei sehr großen Anlagen mit Hunderten von Self-Storage-Abteilen, jeweils eine Unterabteilung abzutrennen, so dass die Kunden und Mieter nur vorbestimmte Bereiche - die Unterabteilung - der Self-Storage-Anlage betreten können, in dem Ihr(e) angemietetes/angemieteten Self-Storage-Abteil(e) liegt/liegen.

Typischerweise erhält der Kunde einen Zugangscode und/oder Zugangsschlüssel und/oder RFID-Chip für die Eingänge zu der gesamten Self-Storage-Anlage, für die Unterabteilung - wenn vorhanden - und für das angemietete Self-Storage-Abteil selbst.

Da die Ausrüstung und der Unterhalt einer Self-Storage-Anlage erheblichen Aufwand und Kosten verursacht, wird nach einer Lösung gesucht, die zukunftsfähig die gesamte Kommunikation und Installation (z.B. Beleuchtung, Schließanlagen, Überwachung, Brandschutz, etc.) in der Self-Storage-Anlage vereinfacht, die Kosten reduziert und dem Betreiber der Self-Storage-Anlage Möglichkeiten an die Hand gibt, um individuelle Funktionen für die jeweiligen Nutzer bzw. Kunden der angemieteten Self-Storage-Abteile zur Verfügung zu stellen.

Ebenso soll die Lösung der oben geschilderten Probleme es möglich machen, dass die Nachrüstung von vorhandenen Self-Storage-Anlagen damit einfach durchzuführen ist. Und zwar ohne Handwerker und Elektriker, da die Lösung derart angelegt ist, dass auch der Betreiber der Self-Storage-Anlage und/oder seine Angestellten die Installation ohne weitere Fachkenntnisse vornehmen können.

### <Seite 2a hier einfügen>

Die Erfindung weist zur Lösung der Aufgabe die im Patentanspruch 1 angegebenen Merkmale auf. Vorteilhafte Ausgestaltungen hiervon sind in den weiteren Unteransprüchen angegeben.

Erfindungsgemäß umfasst ein modularer Kabelkanal, welcher sich entlang einer Längsrichtung erstreckt, zwei Seitenwände und einen Boden, welcher die Seitenwände miteinander verbindet, wobei an einer Seitenwand am oberen Ende eine Verlängerung vorgesehen ist, die an einer Wand eines abgeschlossenen Raumes (z.B. Self-Storage-Abteil) in einem Gebäude am oberen Ende der Wand befestigbar ist, wobei an den Seitenwänden oder am Boden auf der Innenseite jeweils ein oder mehrere elektrische Kontakte angeordnet sind, die die Versorgung von einem oder mehreren Modulen mit elektrischer Energie bereitstellen, sobald ein Modul in den Kabelkanal eingesetzt ist, wobei am Boden oder an einer Seitenwand eine Datenleitung angeordnet ist, die das eine oder die mehreren Module jeweils mit einem Datenanschluss versorgt, wobei der Kabelkanal an den Enden in Längsrichtung steckbar ausgebildet ist, so dass beliebig viele Kabelkanäle aneinander einsteckbar sind und der Kabelkanal damit verlängerbar ist und wobei durch das Aneinanderstecken der Kabelkanäle die elektrische Verbindung und die Da-Aus der US 2008/030 2566 A1 ist ein modularer Kabelkanal bekannt, welcher sich entlang einer Längsrichtung erstreckt, umfassend zwei Seitenwände und einen Boden, welcher die Seitenwände miteinander verbindet, wobei an den Seitenwänden oder am Boden auf der Innenseite jeweils ein oder mehrere elektrische Kontakte angeordnet sind, die die Versorgung von einem oder mehreren Modulen mit elektrischer Energie bereitstellen, sobald ein Modul in den Kabelkanal eingesetzt ist, und wobei am Boden oder an einer Seitenwand eine Datenleitung angeordnet ist, die das eine oder die mehreren Module jeweils mit einem Datenanschluss versorgt.

Aus der US 2010/038129 A1 ist ein Kabelkanal bekannt, der zwei voneinander abgetrennte Abteilungen aufweist, eine für Stromkabel und eine für Datenkabel. Auf der Rückseite des Kabelkanals sind mehrere Verbindungslaschen ausgebildet, die in dazu komplementäre Halterungen eingreifen, die wiederum an einer Wand angebracht sind.

Aus der US 4 688 869 A ist ein Energieversorgungskanal bekannt, der in verschiedenen Längen produziert wird und mittels flexibler Kabel an den Enden angeschlossen bzw. verlängert wird. Die Befestigung dieses Kanals an einer Wand oder einem Möbel erfolgt mittels Laschen an den Enden des Kanals, die in entsprechende U-förmige Halterungen an der Wand oder dem Möbel eingreifen.

Die Aufgabe der vorliegenden Erfindung ist es daher, eine möglichst einfache Wandbefestigung für einen modularen Kabelkanal zu schaffen.
tenleitung automatisch über die gesamte Länge des Kabelkanals hergestellt und verlängert ist.

Üblicherweise sind Self-Storage-Abteile aus vorgefertigten und profilierten Blechen aufgebaut. In einer Self-Storage-Anlage sind viele dieser Self-Storage-Abteile nebeneinander angeordnet und auf der Zugangsseite dieser Self-Storage-Abteile befindet sich ein Gang, über den die Kunden zu der Zugangstür des angemieteten Self-Storage-Abteils gelangen.

Um die Installation des erfindungsgemäßen Kabelkanals zu vereinfachen, wird die im Patentanspruch 1 genannte Verlängerung hakenförmig ausgebildet und am oberen Ende der Wand des Self-Storage-Abteils - vorzugsweise außen - eingehängt, wie nach Patentanspruch 2 definiert. Dadurch entfällt das Öffnen des Self-Storage-Abteils, welches ggf. bei einem vermieteten Self-Storage-Abteil unmöglich ist, da der Kunde und Mieter anwesend sein müsste, um sein kundeneigenes Schloss zu öffnen.

Alternativ kann nach Patentanspruch 3 eine etwas aufwendigere Lösung für die Befestigung des Kabelkanals gewählt werden, indem diese Verlängerung am oberen Ende der Wand des Self-Storage-Abteils - vorzugsweise außen - angeklebt oder angeschraubt wird.

Vorteilhaft ist es dabei nach Unteranspruch 4, wenn der Kabelkanal an der Außenseite der Wand relativ zum Raum (d.h., dem Self-Storage-Abteil) angeordnet ist.

Da über den erfindungsgemäßen Kabelkanal die gesamte Self-Storage-Anlage mit Strom und Daten versorgt werden soll, weist nach Patentanspruch 5 der Kabelkanal vorzugsweise eine Datenleitung am Boden und elektrischen Kontakte an den Seitenwänden auf.

Patentanspruch 6 definiert, dass der Kabelkanal eine Vielzahl von Modulen aufnimmt, je nach gewünschter Funktion und/oder Anzahl der Räume (Self-Storage-Abteile). Jedes Modul kann eine oder mehrere Funktionen zur Verfügung stellen, wie beispielsweise die Beleuchtung des Gangs oder des Self-Storage-Abteils. Weitere Funktionen werden in der detaillierten Beschreibung der Erfindung beschrieben werden. Die Module werden in den Kabelkanal von oben eingesteckt und stellen die elektrische Verbindung und die Datenverbindung her.

Der erfindungsgemäße Kabelkanal nach Anspruche 7 wird vorzugsweise für Räume eingesetzt, die ein abgeschlossenes Self-Storage-Abteil bilden.

Um die Verbindung zwischen Kabelkanal und der Wand des Self-Storage-Abteils, die eine Leichtbauwand ist, zu verstärken, ist am oberen Ende der Wand des Raumes eine Bördelung nach Patentanspruch 8 vorgesehen.

Bei den oben genannten Funktionen, die die Module zur Verfügung stellen, die in den Kabelkanal eingesteckt werden, handelt es sich gemäß Patentanspruch 9 im Wesentlichen um solche aus den Gruppen: Sicherheit, Komfort, Marketing und Facility-Management.

Vorzugsweise umfassen diese Gruppen von Funktionen nach Patentanspruch 10 jeweils: Sicherheit: Überwachungskamera, vollautomatisches Schloss für eine Tür des Raumes, Brandschutzmelder (Sensoren für Temperatur, CO2, CO, Rauch); Komfort: Kamera, Beschallung, Beleuchtung, Gangleit- bzw. Wegweisungssystem, Wlan-Verstärker und Luftfeuchtemessung; Marketing: Bewegungsmelder, Display, Geruchssprühsystem; Facility-Management: Kamera, Ungezieferbekämpfung, Stechstation für Wachschutz.

Alle Funktionen der Self-Storage-Anlage werden über den Kabelkanal nach Anspruch 11 und die eingesteckten Module über einen zentralen Server verknüpft, der alle Funktionen koordiniert und steuert.

Sollte die Länge des Kabelkanals zu einer Schwächung eines Datensignals in der Datenleitung führen, so kann nach Anspruch 12 ein Modul als Verstärker für die Datenleitung eingebaut werden.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im Folgenden anhand der Zeichnungen näher erläutert. Diese zeigen in:
Fig. 1 eine schematische Querschnittsansicht des erfindungsgemäßen Kabelkanals, der an einer Außenwand eines Raumes im oberen Bereich befestigt ist; und in
Fig. 2 eine schematische Seitenansicht des erfindungsgemäßen Kabelkanals, wobei zwei modulare Kabelkanäle in Längsrichtung ineinander eingesteckt sind und elektrische Kontakte für ein Modul oder mehrere Module im Inneren des Kabelkanals angedeutet sind.

### Detaillierte Beschreibung der Erfindung

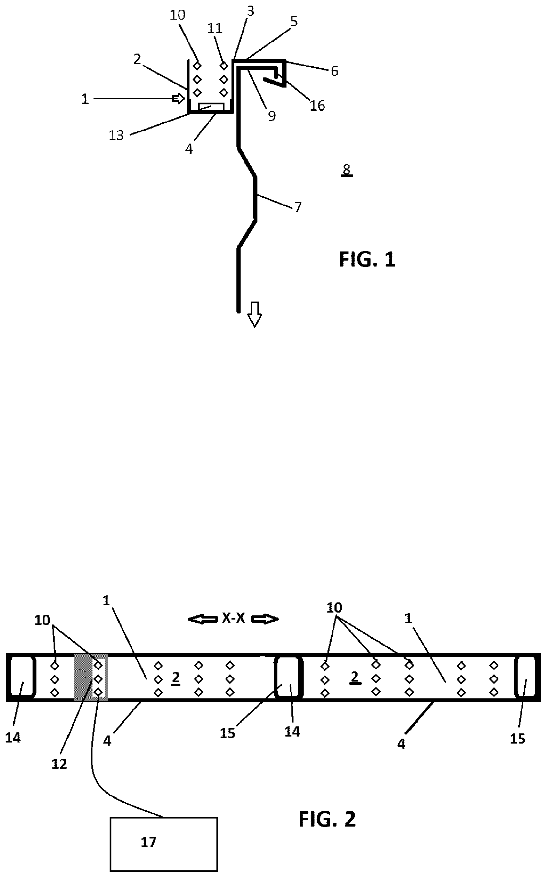

Der erfindungsgemäße Kabelkanal 1 ist in den Figuren 1 und 2 schematisch dargestellt und weist neben zwei Seitenwänden 2 und 3 einen Boden 4 auf, der die beiden Seiten 2 und 3 miteinander verbindet. Der Kabelkanal 1 erstreckt sich im Wesentlichen in Längsrichtung X-X und mehrere Kabelkanäle 1 lassen sich an den Enden 14 und 15 des Kabelkanals 1 ineinander stecken, so dass große Längen des Kabelkanals 1 verwirklicht werden können. Große Längen des Kabelkanals 1 sind deshalb vorteilhaft, weil mit dem erfindungsgemäßen Kabelkanal 1 die komplette Verkabelung und Versorgung einer gesamten Self-Storage-Anlage durchgeführt werden kann. Unter Self-Storage-Anlagen sind Unternehmungen bekannt, die in größeren Gebäuden eine Vielzahl von Abteilen bzw. Räumen einbauen, die dann von Kunden, die zeitweise einen Lagerraum benötigen, angemietet werden. Typischerweise sind in solchen Self-Storage-Anlagen Hunderte von Self-Storage-Abteilen untergebracht. Der Zugang zu den vermieteten Self-Storage-Abteilen ist streng geregelt und abgesichert, so dass möglichst kein Missbrauch, zum Beispiel Einbrüche oder Missachtung von Brandschutz in der Self-Storage-Anlage stattfinden kann. So hat etwa jeder Kunde beispielsweise einen Zugangscode oder -schlüssel für einen bestimmten Bereich der Self-Storage-Anlage und einen Zugangscode oder - schlüssel für sein angemietetes Self-Storage-Abteil. Der Kunde kann daher nicht in beliebige Bereiche der gesamten Self-Storage-Anlage gelangen, sondern nur in den Abschnitt bzw. das Geschoß, in dem sein angemietetes Self-Storage-Abteil liegt.

Diese Self-Storage-Anlagen und -Abteile weisen bestimmte Funktionen auf, die ganz allgemein in die Folgenden Gruppen eingeteilt werden können: Sicherheit, Komfort, Facility-Management und Marketing.

Der erfindungsgemäße Kabelkanal 1 wird in der gesamten Self-Storage-Anlage, vorzugsweise auf der Zugangs- bzw. Gangseite der Self-Storage-Abteile entlang jeder Wand 7 der Vielzahl von Räumen 8, die jeweils ein Self-Storage-Abteil bilden, montiert. Die Montage erfolgt im oberen Endbereich der Wand 7, um die Zugänglichkeit für und die Manipulationen durch die Kunden und Mieter der Self-Storage-Abteile zu erschweren. Vorzugsweise wird der Kabelkanal 1 am oberen Ende 9 der Wand 7 eingehängt, da an einer der Seitenwände 2 oder 3 des Kabelkanals 1 am oberen Ende 5 eine hakenförmige Verlängerung 6 vorgesehen ist. Alternativ kann der Kabelkanal 1 auch an der Wand 7 verklebt oder angeschraubt oder vernietet werden. Die Wand 7 ist meistens eine Leichtbauwand, die profiliert ausgebildet ist, um die Stabilität zu erhöhen und weist im oberen Bereich eine Bördelung 16 als Verstärkung auf.

Wird eine bestehende Self-Storage-Anlage nachträglich mit dem erfindungsgemäßen Kabelkanal 1 nachgerüstet, so ist die Befestigung des Kabelkanals 1 an der Zugangs- oder Gangseite der Self-Storage-Abteile von großem Vorteil, da die Installation erst einmal ohne das Betreten der vermieteten Self-Storage-Abteile erfolgen kann. In diesem Fall können weitere Funktionalitäten, die der Mieter oder Betreiber wünscht, wie etwa eine Beleuchtung des Self-Storage-Abteils, über die Decke des Self-Storage-Abteils installiert werden, wenn die Decke in Form eines Gitters/Maschendrahts ausgeführt ist.

Je nach gewünschter Funktionalität der Self-Storage-Abteile kann ein Betreten unter Anwesenheit des Mieters zu einem späteren Zeitpunkt erfolgen, um beispielsweise eine Beleuchtung in dem Raum 8 (dem Self-Storage-Abteil) zu installieren oder andere Funktionen einzubauen, die der Mieter gerne hätte, beispielsweise einen Brand- bzw. Rauchmelder oder eine Überwachungskamera.

Bei einer kompletten Neuinstallation der Self-Storage-Anlage kann der Kabelkanal prinzipiell auch an einem anderen Ort als an der Außenseite der Wand 7 angebracht werden, da die Zugänglichkeit hier noch keine Rolle spielt. Doch ist die freie Zugänglichkeit des Kabelkanals 1 beispielsweise für die Betreiber der Self-Storage-Anlage dann besonders wichtig, wenn weitere Funktionen eingebaut oder frei geschaltet werden sollen.

Wenn in der vorliegenden Anmeldung von einem modularen Kabelkanal 1 die Rede ist, der sich im Wesentlichen entlang einer Längsrichtung X-X erstreckt, so ist damit gemeint, dass der erfindungsgemäße Kabelkanal 1 eine erhebliche Länge in dieser Längsrichtung aufweisen kann, je nach Größe der Self-Storage-Anlage mehrere Hundert oder gar Tausende Meter lang, und dass dem Fachmann klar ist, dass es zur vollständigen Verkabelung der Self-Storage-Anlage auch Eckmodule, Y-Module, etc. benötigt, um den Kabelkanal 1 um Ecken herum oder von einem Geschoß ins nächste Geschoß zu führen. Die Enden dieser Module sind selbstverständlich ebenso steckbar wie der Kabelkanal 1 selber.

Der erfindungsgemäße Kabelkanal 1 weist innenliegend einen oder mehrere elektrische Kontakte 10 und 11 auf, die die Versorgung von einem oder mehreren Modulen 12 mit elektrischer Energie übernehmen. Sobald ein solches Modul 12 in den Kabelkanal 1 eingesetzt wird, erhält das Modul 12 über die elektrischen Kontakte 10, 11 die Versorgung mit Elektrizität. Die elektrischen Kontakte 10 und 11 können durch eine Abdeckung (nicht dargestellt) vor Berührung oder Verschmutzung geschützt sein. Diese Abdeckung wird händisch entfernt, bevor ein Modul 12 in den Kabelkanal 1 eingesetzt wird. Jedes Modul 12 ist im Wesentlichen quaderförmig ausgebildet und lässt sich in den Kabelkanal 1 von oben einführen. Jedes Modul 12 kann bestimmte Funktionen zur Verfügung stellen, wie beispielsweise die Kommunikation zwischen Sensoren (Temperatur, CO2, Luftfeuchte usw.) oder Kameras und einem zentralen Server 17 herzustellen.

In der Figur 1 ist am Boden 4 des Kabelkanals 1 eine Datenleitung 13 dargestellt, die die Versorgung mit Daten herstellt. Sobald ein Modul 12 in den Kabelkanal 1 eingesteckt ist, wird eine Verbindung zwischen Modul 12 und Datenleitung 13 hergestellt. Die Datenleitung 13 ist an den zentralen Server 17 der Self-Storage-Anlage angeschlossen, der die komplette Steuerung der Funktionen und/oder die Alarmierung koordiniert und/oder Informationen an Betreiber oder Kunden weiterleitet.

Die Anordnung der elektrischen Kontakte 10, 11 und der Datenleitung 13 ist in der besonders bevorzugten Ausführungsform, wie in den Figuren 1 und 2 dargestellt, an den Seitenwänden 2 und 3 und am Boden 4 vorgesehen. In jeden Kabelkanal 1 sind jeweils mehrere Module 12 einsteckbar.

Im Folgenden sollen die Funktionen der oben genannten Gruppen beschrieben werden, die mit dem erfindungsgemäßen Kabelkanal 1 verwirklicht werden können. Erst der modulare Kabelkanal 1 nach der vorliegenden Erfindung lässt es zu, dass der Betreiber der Self-Storage-Anlage alle Funktionen je nach Wunsch der Kunden und Bedarf des Betreibers der Self-Storage-Anlage einfach installieren und warten kann. Gegebenenfalls ist die Freischaltung weiterer Funktionen ohne Zuhilfenahme beispielsweise eines Elektrikers durch Angestellte des Betreibers durchzuführen, da es sich im Wesentlichen um das Einstecken weiterer Module 12 in den Kabelkanal 1 handelt und um die softwaremäßige Freischaltung dieser Module 12 und deren Funktionen am zentralen Server 17.

Der Kabelkanal 1 lässt sich in festen und unterschiedlichen Längen von beispielsweise Im, 2m und 3m beziehen, so dass über das Ineinanderstecken dieser modulare Kabelkanal 1 in der Länge beliebig erweiterbar ist und die gesamte Self-Storage-Anlage versorgen kann. Um von Geschoß zu Geschoß den Kabelkanal 1 zu verlegen, werden Eckmodule, Y-Module, etc. benötigt, wie oben beschrieben.

Die Wesentlichen Vorteile des erfindungsgemäßen Kabelkanals 1 sind die Kostenersparnis beim Einbau und die modulare Erweiterbarkeit der Funktionalität, die den Kunden und Mietern der Self-Storage-Abteile zur Verfügung gestellt werden. Mit dem Kabelkanal 1 können jedoch nicht nur Funktionen in den Self-Storage-Abteilen sondern auch im Bereich Facility-Management verwirklicht werden.

Zum Verständnis: Es gibt in den meisten Self-Storage-Anlagen ein Büro, um die Kunden und Mieter direkt anzusprechen und zu bedienen. Jedoch kann es Anlagen geben, die vollautomatisch arbeiten (ohne Personal) oder das Büro kann außerhalb der Geschäftszeiten unbesetzt sein. Dann lassen sich über das System bestehend aus Kabelkanal 1, zentralem Server 17 und den Funktionen der Module 12 bestimmte Funktionen verwirklichen, die den Zugang zu den Self-Storage-Abteilen regeln und ermöglichen, sowie sicherstellen, dass beispielsweise im Falle eines Brandes oder einer Brandgefahr Alarm gegeben wird.

Typischerweise betritt ein Kunde bzw. Mieter die Self-Storage-Anlage durch den Haupteingang mit seinem Zugangscode (im Folgenden wird nur der Begriff Zugangscode verwendet, auch wenn damit der Begriff Zugangsschlüssel mit umfasst sein soll), wobei Bewegungsmelder aktiviert werden, die die Bewegung des Kunden registrieren. Solche Bewegungsmelder befinden sich in der gesamten Self-Storage-Anlage und dienen beispielsweise dazu, die Gangbeleuchtung über den zentralen Server 17 zu aktivieren, sobald der Kunde in Richtung seines Ganges, in dem sich sein Self-Storage-Abteil befindet, bewegt. Verlässt der Kunde einen bestimmten Gang und geht in den nächsten Gang, so können die Bewegungsmelder das Erfassen und der Server das Licht im Gang, der soeben verlassen wurde, abschalten. Diese Funktionalität fällt unter die Gruppe Facility-Management. Dem Kunden wird praktischerweise durch die automatische Beleuchtung der Gänge der Weg zu seinem angemieteten Abteil gezeigt, was insbesondere bei unbemannten Self-Storage-Anlagen von Vorteil ist. Jeder Bewegungsmelder und jede Beleuchtung wird dabei über ein Modul 12, welches in den Kabelkanal 1 eingesteckt ist, betrieben und gesteuert.

Im Bereich Sicherheit lassen sich über eine Vielzahl von Kameras, die ebenfalls jeweils über ein Modul 12 betrieben und kontrolliert werden, Funktionen zur Verfügung stellen, wie etwa die Aufzeichnung der Bewegungen bzw. Bewegungsmuster der Kunden in der Self-Storage-Anlage oder gar die Zugangskontrolle zu einzelnen Bereichen der Self-Storage-Anlage oder des Self-Storage-Abteils selbst, beispielsweise mittels Gesichtserkennung, wie bereits an Flughäfen üblich.

Vorteilhafterweise kann im Bereich Sicherheit auch ein vollautomatisches Schloss eines jeden Self-Storage-Abteils verwirklicht werden, indem über ein Modul 12 die Verriegelung des Schlosses ansteuerbar ist, so dass der Kunde zum Beispiel über die Eingabe eines Zugangscodes am Schloss selbst, über ein App auf dem tragbaren Telefon oder einen Rfid-Chip den Zugang zum angemieteten Self-Storage-Abteil erhält.

Mittels eines weiteren Moduls 12 lässt sich im Bereich Sicherheit der Brandschutz verbessern, da über entsprechende Sensoren (nicht dargestellt) zum Beispiel die Temperatur in einem Self-Storage-Abteil gemessen wird, wobei der Sensor den gemessenen Wert an das Modul 12 liefert und das Modul 12 den Wert an den Server 17 über die Datenleitung 13 sendet. Sobald ein kritischer Schwellenwert der Temperatur überschritten wird, kann der Server 17 Alarm auslösen und in Abhängigkeit von der Höhe der Überschreitung des Schwellenwertes unterschiedliche Aktionen veranlassen, wie etwa die telefonische Benachrichtigung des Betreibers der Self-Storage-Anlage oder gar die Alarmierung der örtlichen Feuerwehr. Für den Fall, dass in einer Self-Storage-Anlage mehrere Self-Storage-Abteile jeweils einen eigenen Sensor für die Temperatur haben, lässt sich über das zugeordnete Modul 12 der entsprechende Wert an den Server 17 melden, so dass über einen Vergleich zwischen diesen überwachten Self-Storage-Abteilen eine Brandgefahr lokalisieren lässt.

Im Bereich Komfort lassen sich für die Kunden und Mieter der Self-Storage-Abteile Funktionen über den Kabelkanal 1 und die Module 12 zur Verfügung stellen, die zum Beispiel die Beschallung betreffen. Dem Kunden könnten Anweisungen über Lautsprecher gegeben werden, in welcher Richtung er zu seinem angemieteten Self-Storage-Abteil gelangt oder es könnten Musik wiedergegeben werden, um eine angenehme Atmosphäre zu schaffen. Die Lautsprecher wären über die Module 12 mit dem zentralen Server 17 verbunden. Alternativ könnten in den Gängen der Self-Storage-Anlage LED-Bänder angebracht werden, die über die Module 12 und den Server 17 angesteuert werden und die im Sinne eines Lauflichtes die Richtung vorgeben, in die der Kunden zu seinem Self-Storage-Abteil gelangt, zum Ausgang gelangt, wenn er sein Self-Storage-Abteil wieder verlässt bzw. sogar im Notfall, wie beispielsweise einer Evakuierung der Self-Storage-Anlage nach einer Brandmeldung, schnellstmöglich den nächsten Notausgang findet.

Im Bereich Marketing ist es verwirklichbar, dass über den Kabelkanal 1 und die Module 12 die Bewegungsmelder und/oder die Kameras direkt gesteuert und ausgelesen werden, um die Aktivitäten und den Zugang am Self-Storage-Abteil zu überwachen und zu registrieren. Diese Funktionen bieten Auswertemöglichkeiten für den Betreiber der Self-Storage-Anlage, um die Auslastung und ggf. Umstrukturierung der Self-Storage-Abteile besser planen zu können. Wird an einem bestimmten Self-Storage-Abteil festgestellt, dass das Abteil ggf. zu groß (zu viele qm) oder zu klein ist, so kann dem Kunden über einen Bildschirm am Abteil angeboten werden, das Abteil zu wechseln. Der Bildschirm ist über ein Modul 12 am Server 17 angeschlossen. Über den Bildschirm lassen sich auch weitere Dienste an den Kunden bewerben, wie beispielsweise Umzugsfirmen.

Ebenso ist Geruchsmarketing in dieser Gruppe, da über ein Modul 12 im Kabelkanal 1 ein Geruchsausstoß erfolgen kann, der das Wohlbefinden der Kunden steigert.

Im Bereich Sicherheit sei noch ein Infrarotsensor zu erwähnen, der über ein Modul 12 den Innenbereich eines Self-Storage-Abteils überwacht und beispielsweise bei starkem Ansteigen einer Temperatur (z.B. eingelagerte Batterie überhitzt) in einem Bereich des Abteils zur Auslösung eines Alarms über den Server 17 beiträgt.

Letztendlich sollen noch zwei Funktionen beschrieben werden, die in den Bereich Facility-Management fallen: Ungezieferbekämpfung und Wachschutz. Über ein Modul 12 lassen sich zur Bekämpfung von beispielsweise Motten Pheromone aus einer Düseneinrichtung ausstoßen, die die Motten anlocken und in einer Falle fängt oder mittels einer Ultraviolettbeleuchtung bekämpfen. Der Wachschutz kann ggf. erforderlich sein, um große Self-Storage-Anlagen zu bewachen oder um gesonderte Bereiche der Self-Storage-Anlage zu bewachen, in denen höherwertige Dinge (z.B. Kunstgegenstände) eingelagert werden, wobei über ein Modul 12 eine Stechstation angesteuert wird, die das Wachpersonal regelmäßig bedienen muss, um zu protokollieren, welche Bereiche wann überwacht worden sind.

Die Vorteile des erfindungsgemäßen Kabelkanals 1 zusammengefasst, sind die einfache Installation, die modulare Erweiterbarkeit für beliebig große Self-Storage-Anlagen und die Kostenersparnis gegenüber herkömmlich bekannten und deutlich aufwändigeren Verkabelungen.

Der Kunde der Self-Storage-Anlage erhält zahlreiche Komfortmerkmale, wie Sicherheit, Wohlbefinden, einfache Bedienung und unkomplizierter Zugang.

Mit dem erfindungsgemäßen Kabelkanal 1 lässt sich ein System zur Steuerung einer komplexen Self-Storage-Anlage verwirklichen, wobei der Server 17 über den Kabelkanal 1 mit einer Vielzahl von Beleuchtungsmitteln, einer Mehrzahl von Sensoren sowie einer Mehrzahl von Schlössern der Self-Storage-Abteile verbunden ist, so dass der Server 17 von den Sensoren jeweils Messwerte (z.B. Temperatur, Luftfeuchte, CO2, CO, Rauchdichte, usw.) übermittelt erhält, sowie der Server 17 die Schlösser in Abhängigkeit der Zugangsanfragen der Kunden und Nutzer der angemieteten Self-Storage-Abteile ansteuert und auf- oder zusperrt, und wobei der Server 17 die Beleuchtungsmittel an oder ausschaltet, je nach gewählter Komfortstufe. Elektrizität und Daten werden dabei mittels der Module 12 übertragen, die in den Kabelkanal 1 am gewünschten Platz einsteckbar sind, um so die Sensoren, Schlösser, Beleuchtungsmittel usw. mit dem Server 17 zu verbinden.

Hinsichtlich vorstehend im Einzelnen nicht näher erläuterter Merkmale der Erfindung wird in übrigen ausdrücklich auf die Patentansprüche und die Zeichnung verwiesen.

## Patentansprüche

1. Modularer Kabelkanal (1), welcher sich entlang einer Längsrichtung (X-X) erstreckt, umfassend:
zwei Seitenwände (2, 3) und einen Boden (4), welcher die Seitenwände (2, 3) miteinander verbindet;
eine Datenleitung (13);
wobei an den Seitenwänden (2, 3) oder am Boden (4) auf der Innenseite jeweils ein oder mehrere elektrische Kontakte (10, 11) angeordnet sind, die die Versorgung von einem oder mehreren Modulen (12) mit elektrischer Energie bereitstellen, sobald ein Modul (12) in den Kabelkanal (1) eingesetzt ist;
wobei am Boden (4) oder an einer Seitenwand (2, 3) die Datenleitung (13) angeordnet ist, die das eine oder die mehreren Module (12) jeweils mit einem Datenanschluss versorgt, wobei
der Kabelkanal (1) an den Enden (14, 15) in Längsrichtung (X-X) steckbar ausgebildet ist, so dass beliebig viele Kabelkanäle (1) aneinander einsteckbar sind und der Kabelkanal (1) damit verlängerbar ist, und wobei
durch das Aneinanderstecken der Kabelkanäle (1) die elektrische Verbindung und die Datenleitung (13) automatisch über die gesamte Länge des Kabelkanals (1) hergestellt und verlängert ist, und **dadurch gekennzeichnet, dass**
an einer Seitenwand (3) am oberen Ende (5) eine Verlängerung (6) vorgesehen ist, die an einer Wand (7) eines abgeschlossenen Raumes (8) in einem Gebäude am oberen Ende (9) der Wand (7) befestigbar ist.

2. Kabelkanal (1) nach Anspruch 1, wobei die Verlängerung (6) hakenförmig ausgebildet ist und am oberen Ende (9) einer Wand (7) eingehängt ist.

3. Kabelkanal (1) nach Anspruch 1, wobei die Verlängerung (6) am oberen Ende (9) einer Wand (7) angeklebt oder angeschraubt ist.

4. Kabelkanal (1) nach einem der Ansprüche 1 bis 3, wobei die Verlängerung (6) an der Außenseite der Wand (7) relativ zu einem Raum (8) angeordnet ist.

5. Kabelkanal (1) nach einem der Ansprüche 1 bis 4, wobei die Datenleitung (13) am Boden (4) angeordnet ist und die elektrischen Kontakte (10, 11) an den Seitenwänden (2, 3) angeordnet sind.

6. Kabelkanal (1) nach einem der Ansprüche 1 bis 5, wobei eine Vielzahl von Modulen (12) in den Kabelkanal (1) nebeneinander einsetzbar ist, je nach gewünschter Funktion und/oder Anzahl der Räume (8).

7. Kabelkanal (1) nach einem der Ansprüche 1 bis 6, wobei der Raum (8) ein Self-Storage-Abteil ist.

8. Kabelkanal (1) nach einem der Ansprüche 1 bis 7, wobei die Wand (7) eine Leichtbauwand ist, die am oberen Ende (9) eine Bördelung (16) zur Verstärkung aufweist.

9. Kabelkanal (1) nach einem der Ansprüche 1 bis 8, wobei jedes Modul (12) eine Funktion zur Verfügung stellt, aus den Gruppen: Sicherheit und/oder Komfort und/oder Marketing und/oder Facility-Management.

10. Kabelkanal (1) nach Anspruch 9, wobei diese Gruppen wahlweise folgende Funktionen umfassen:
Sicherheit: Überwachungskamera, vollautomatisches Schloss für eine Tür des Raumes (8), Brandschutzmelder, Sensoren für Temperatur, CO2, CO, Rauch;
Komfort: Kamera, Beschallung, Beleuchtung, Gangleit- bzw. Wegweisungssystem, Wlan-Verstärker und Luftfeuchtemessung;
Marketing: Bewegungsmelder, Display, Geruchssprühsystem;
Facility-Management: Kamera, Ungezieferbekämpfung, Stechstation für Wachschutz.

11. Kabelkanal (1) nach einem der Ansprüche 1 bis 10, wobei die Ansteuerung des Moduls (12) oder der Module (12) über einen zentralen Server (17) erfolgt, der alle Funktionen koordiniert und steuert.

12. Kabelkanal (1) nach einem der Ansprüche 1 bis 11, wobei ein Modul (12) in den Kabelkanal (1) eingesetzt wird, welches als Verstärker für die Datenleitung (13) dient, sobald eine gewisse Länge des Kabelkanals (1) erreicht ist.

## Claims

1. Modular cable duct (1) extending along a longitudinal direction (X-X), comprising:
two lateral walls (2, 3) and a bottom (4) connecting the lateral walls (2, 3) to one another;
a data line (13);
one or more electrical contacts (10, 11) being arranged on the lateral walls (2, 3) or on the bottom (4) on the inside in each case, which electrical contacts supply one or more modules (12) with electrical energy as soon as a module (12) is inserted into the cable duct (1);
the data line (13), which supplies the one or more modules (12) with a data connection in each case, being arranged on the bottom (4) or on a lateral wall (2, 3),
the cable duct (1) being designed to be pluggable at the ends (14, 15) in the longitudinal direction (X-X), so that any number of cable ducts (1) can be plugged into one another and the cable duct (1) can thus be extended, and
the electrical connection and the data line (13) automatically being produced and
extended over the entire length of the cable duct (1) by plugging the cable ducts (1) together, **characterized in that**
an extension (6) is provided on a lateral wall (3) at the upper end (5), which extension can be fastened to a wall (7) of an enclosed room (8) in a building at the upper end (9) of the wall (7).

2. Cable duct (1) according to claim 1, wherein the extension (6) is hook-shaped and is hooked onto the upper end (9) of a wall (7).

3. Cable duct (1) according to claim 1, wherein the extension (6) is glued or screwed to the upper end (9) of a wall (7).

4. Cable duct (1) according to any of claims 1 to 3, wherein the extension (6) is arranged on the outside of the wall (7) relative to a room (8).

5. Cable duct (1) according to any of claims 1 to 4, wherein the data line (13) is arranged on the bottom (4) and the electrical contacts (10, 11) are arranged on the lateral walls (2, 3).

6. Cable duct (1) according to any of claims 1 to 5, wherein a large number of modules (12) can be inserted into the cable duct (1) next to one another, depending on the desired function and/or number of rooms (8).

7. Cable duct (1) according to any of claims 1 to 6, wherein the room (8) is a self-storage compartment.

8. Cable duct (1) according to any of claims 1 to 7, wherein the wall (7) is a lightweight wall that has a flange (16) for reinforcement at the upper end (9).

9. Cable duct (1) according to any of claims 1 to 8, wherein each module (12) provides a function from the groups: security and/or comfort and/or marketing and/or facility management.

10. Cable duct (1) according to claim 9, wherein these groups optionally include the following functions:
security: surveillance camera, fully automatic lock for a door of the room (8), fire alarm and sensors for temperature, CO2, CO and smoke;
comfort: camera, sound system, lighting, aisle guidance or signage system, Wi-Fi booster and air humidity measurement;
marketing: motion detector, display, odor spraying system;
facility management: camera, vermin control, checkpoints for security guards.

11. Cable duct (1) according to any of claims 1 to 10, wherein the module (12) or the modules (12) are controlled via a central server (17) that coordinates and controls all of the functions.

12. Cable duct (1) according to any of claims 1 to 11, wherein a module (12) is inserted into the cable duct (1), which module is used as an amplifier for the data line (13) as soon as the cable duct (1) has reached a certain length.

## Revendications

1. - Goulotte modulaire de passage de câbles (1), laquelle s'étend le long d'une direction longitudinale (X-X), comportant :
deux parois latérales (2, 3) et un fond (4), lequel relie les parois latérales (2, 3) entre elles ;
une ligne de données (13) ;
dans laquelle, sur les parois latérales (2, 3) ou sur le fond (4) sur le côté interne à chaque fois, un ou plusieurs contacts électriques (10, 11) sont disposés, qui fournissent l'alimentation d'un ou plusieurs modules (12) en énergie électrique dès qu'un module (12) est introduit dans la goulotte de passage de câbles (1) ;
dans laquelle, sur le fond (4) ou sur une paroi latérale (2, 3), la ligne de données (13) est disposée, qui alimente ledit module (12) ou lesdits plusieurs modules (12) à chaque fois avec une connexion de données ;
dans laquelle la goulotte de passage de câbles (1) est conçue pour être enfichable sur les extrémités (14, 15) dans la direction longitudinale (X-X), de telle sorte qu'autant de goulottes de passage de câbles (1) que nécessaire sont enfichables entre elles et que la goulotte de passage de câbles (1) est par là apte à être prolongée ; et
dans laquelle, par l'enfichage des goulottes de passage de câbles (1) entre elles, la connexion électrique et la ligne de données (13) sont automatiquement réalisées et prolongées sur toute la longueur de la goulotte de passage de câbles (1), et **caractérisée par le fait que**, sur une paroi latérale (3) à l'extrémité supérieure (5), un prolongement (6) est prévu, qui est apte à être fixé à une paroi (7) d'un espace fermé (8) dans un bâtiment à l'extrémité supérieure (9) de la paroi (7).

2. - Goulotte de passage de câbles (1) selon la revendication 1, dans laquelle le prolongement (6) est réalisé en forme de crochet et est accroché à l'extrémité supérieure (9) d'une paroi (7).

3. - Goulotte de passage de câbles (1) selon la revendication 1, dans laquelle le prolongement (6) est collé ou vissé à l'extrémité supérieure (9) d'une paroi (7) .

4. - Goulotte de passage de câbles (1) selon l'une des revendications 1 à 3, dans laquelle le prolongement (6) est disposé sur le côté externe de la paroi (7) par rapport à un espace (8).

5. - Goulotte de passage de câbles (1) selon l'une des revendications 1 à 4, dans laquelle la ligne de données (13) est disposée sur le fond (4) et les contacts électriques (10, 11) sont disposés sur les parois latérales (2, 3).

6. - Goulotte de passage de câbles (1) selon l'une des revendications 1 à 5, dans laquelle plusieurs modules (12) sont aptes à être introduits dans la goulotte de passage de câbles (1) les uns à côté des autres, selon la fonction souhaitée et/ou le nombre souhaité des espaces (8) .

7. - Goulotte de passage de câbles (1) selon l'une des revendications 1 à 6, dans laquelle l'espace (8) est un compartiment d'auto-stockage.

8. - Goulotte de passage de câbles (1) selon l'une des revendications 1 à 7, dans laquelle la paroi (7) est une paroi légère qui présente, à l'extrémité supérieure (9), un bord rabattu(16) pour le renforcement.

9. - Goulotte de passage de câbles (1) selon l'une des revendications 1 à 8, dans laquelle chaque module (12) met à disposition une fonction, parmi les groupes : sécurité et/ou confort et/ou marketing et/ou gestion des installations.

10. - Goulotte de passage de câbles (1) selon la revendication 9, dans laquelle ces groupes comportent facultativement les fonctions suivantes :
Sécurité : caméra de surveillance, serrure entièrement automatique pour une porte de la pièce (8), détecteur de sécurité incendie, détecteurs pour la température, CO₂, CO, la fumée ;
Confort : caméra, sonorisation, éclairage, système de guidage en couloir ou de signalisation, amplificateur wifi et mesure de l'humidité de l'air ;
Marketing : détecteur de mouvement, afficheur, système de pulvérisation de parfum ;
Gestion des installations : caméra, lutte contre les parasites, station de pointage pour la sécurité.

11. - Goulotte de passage de câbles (1) selon l'une des revendications 1 à 10, dans laquelle la commande du module (12) ou des modules (12) a lieu par un serveur central (17) qui coordonne et commande toutes les fonctions.

12. - Goulotte de passage de câbles (1) selon l'une des revendications 1 à 11, dans laquelle un module (12) est inséré dans la goulotte de passage de câbles (1), lequel sert d'amplificateur pour la ligne de données (13) dès qu'une certaine longueur de la goulotte de passage de câbles (1) est atteinte.
